# EUROPEAN PATENT APPLICATION

(11) **EP 1 283 622 A2**
(43) Date of publication of application: **12.02.2003**
(21) Application number: 02255364.8
(22) Date of filing: 31.07.2002
(51) Int. Cl.: H04L 12/28

(54) **Handoff of Bluetooth Connections**

(30) Priority: 10.08.2001 GB 0119561
(71) Applicant: Red-M (Communications) Limited, Wooburn Green, Buckinghamshire HP10 0HH (GB)
(72) Inventor: Harrison, Simon, High Wycombe, Buckinghamshire HP12 6EH (GB)
(74) Representative: Finnie, Peter John

(57) **Abstract**

According to the invention, a wireless communications device (an End-Point) in wireless network performs a Role Change to become Master in a connection with a network Access Point, with the Access Point to which it is connected acting as a Slave. A connection is then made to another Access Point (or Bluetooth radio) with the End-Point being Master of both connections simultaneously. The connection with the first Access Point is then terminated. Finally, the End-Point performs a reverse Role Change and becomes a Slave again in the normal manner.

Accordingly, the present invention removes the requirement for an End-Point to implement a transient scatternet when being handed off from one Access Point to another in a Bluetooth network.

## Description

### Background to the Invention

Wireless types of networks are now becoming more wide spread. Wireless communication can be broken down into one of three main categories, radio, cellular and local. Radio communications are used for mainly long distance work, and cellular communications are used for mobile phones and the like. At present, the cellular system can also be used to provide limited Internet access using WAP (Wireless Application Protocol) phones. Internet access is also possible via a cellular phone, a GSM modem and a PC/PDA.

In addition to this, the local communication standards are also provided for short-range radio communication. These systems have been used within the production of wireless networks.

One such short-range radio communication radio system is Bluetooth which can be used to provide customer premises wireless links for voice, data and multimedia applications.

A Bluetooth Radio Frequency (RF) system is a Fast Frequency Hopping Spread Spectrum (FFHSS) system in which packets are transmitted in regular time slots on frequencies defined by a pseudo random sequence. A Frequency Hopping system provides Bluetooth with resilience against interference. Interference may come from a variety of sources including microwave ovens and other communication systems operating in this unlicensed radio band which can be used freely around the world. The system uses 1MHz frequency hopping steps to switch among 79 frequencies in the 2.4GHz Industrial, Scientific and Medical (ISM) band at 1600 hops per second with each channel using a different hopping sequence.

The Bluetooth baseband architecture includes a Radio Frequency transceiver (RF), a Link Controller (LC) and a Link Manager (LM) implementing the Link Manager Protocol (LMP).

Bluetooth version 1.1 supports asymmetric data rates of up to 721Kbits per second and 57.6Kbits per second and symmetric data rates of up to 432.5Kbits per second. Data transfers may be over synchronous connections, Bluetooth supports up to three pairs of symmetric synchronous voice channels of 64Kbits per second each.

Bluetooth connections operate in something called a piconet in which several nodes accessing the same channel via a common hopping sequence are connected in a point to multi-point network. The central node of a piconet is called a master that has up to seven active slaves connected to it in a star topology. The bandwidth available within a single piconet is limited by the master, which schedules time to communicate with its various slaves. In addition to the active slaves, devices can be connected to the master in a low power state known as park mode, these parked slaves cannot be active on the channel but remain synchronised to the master and addressable. Having some devices connected in park mode allows more than seven slaves be attached to a master concurrently. The parked slaves access the channel by becoming active slaves, this is regulated by the master.

Multiple piconets with overlapping coverage may co-operate to form a scatternet in which some devices participate in more that one piconet on a time division multiplex basis. These and any other piconets are not time or frequency synchronised, each piconet maintains is own independent master clock and hopping sequence.

The Bluetooth specification has therefore been designed for the primary purpose of allowing electronic devices to communicate with each other. Thus, the system is typically utilized in an environment in which one-to-one communication is achieved between two Bluetooth enabled devices.

In the situation in which voice communication is being provided, this will typically be achieved either using a handset, a Bluetooth enabled phone, or a voice communication enabled Bluetooth PDA (otherwise known as an End-Point). The user will utilize the Bluetooth device as a handset in the normal way. Signals are then transferred via a Bluetooth link to some form of connection to a network. Thus for example, this may be achieved by establishing a Bluetooth link with a desktop PC, or the like. Voice data received from the Bluetooth enable communications device will then be transferred from the PC to a local area network and then on either to a PBX (private branch exchange), the Internet (for voice over IP (VOIP)), or the PSTN (public switched telephone network).

However, the Bluetooth system is only capable of communicating over short distances. In addition to this, the Bluetooth specification does not include any protocol regarding the transfer of voice calls from one Bluetooth device to another. As a result, if the user's Bluetooth enable communications device is moved out of range of the desktop PC then Bluetooth connection between the communications device and the PC will be lost. As a result, the voice call will fail.

Hand-off (transferring an End-Point's connection from one Access Point to another) is currently achieved by disconnecting from a first Access Point and connecting to a second Access Point, hence a brief gap in service between connections. This is obviously very bad for voice connections. The PAN group's Phase 2 work (just beginning to be specified) suggests that a make-before-break system will be used, where for a short period of time the End-Point has two simultaneous connections between two Access Points. While this will allow seamless handoff between Access Points, the demands on the End-Point are high, requiring scatternet functionality (something not yet demonstrated with voice calls). It is desirable to keep the End-Points cheap and simple (high volume devices) and put the load on the infrastructure (low volume, more complex devices).

### Summary of the Invention

In the preferred embodiment, a wireless communications device (an End-Point) performs a Role Change to become Master, with the Access Point to which it is connected acting as a Slave. A connection is then made to another Access Point (or Bluetooth radio) with the End-Point being Master of both connections simultaneously. The connection with the first Access Point is then terminated. Finally, the End-Point performs a reverse Role Change and becomes a Slave again in the normal manner.

Accordingly, the present invention removes the requirement for an End-Point to implement a transient scatternet when being handed off from one Access Point to another in a Bluetooth network.

### Brief Description of the Drawings

Examples of the present invention will now be described in detail with reference to the accompanying drawings, in which:
Figure 1 is a schematic diagram of a network according to the present invention;
Figure 2 is a schematic diagram of the Access Server of Figure 1;
Figure 3 is a schematic diagram of the Access Point of Figure 1; and,
Figures 4 to 7 are examples of alternative network arrangements.

### Detailed Description

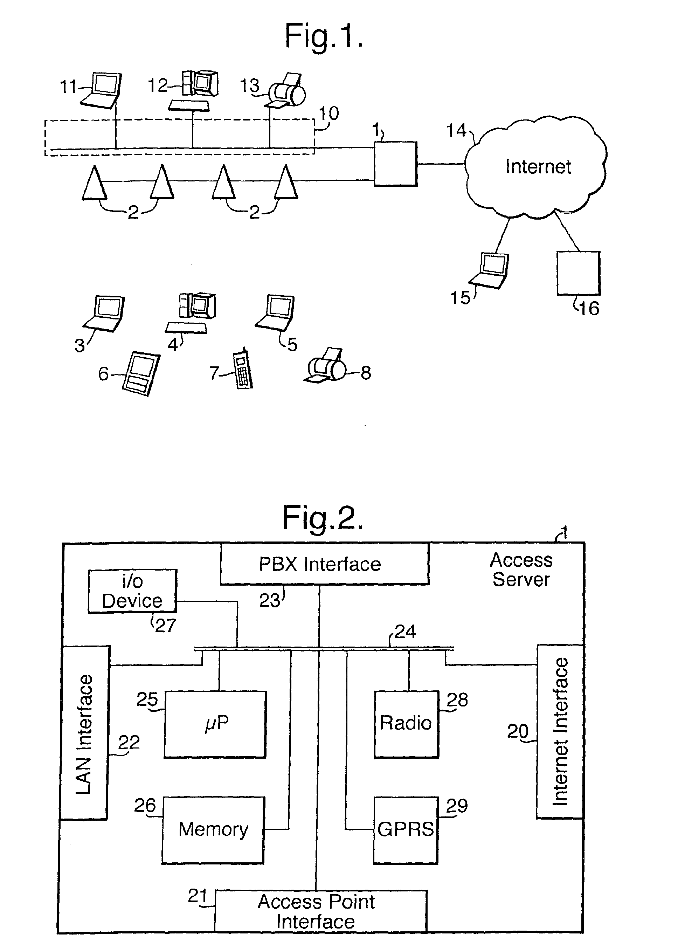

Figure 1 shows a basic network arrangement according to the present invention. As shown, the network includes an Access Server 1 which is coupled to a number of local area network Access Points 2. The Access Points 2 are designed to communicate with a number of Bluetooth enabled communications devices 3,4,5,6,7,8 using Bluetooth connection.

In this scenario, the Bluetooth communication devices 3,4,5,6,7,8 can include devices such as a personal computer, laptop or the like which is fitted with a Bluetooth adapter, a specialised Bluetooth laptop, a Bluetooth enabled phone or mobile phone, a WAP Internet phone, a Bluetooth enabled personal data assistant (PDA) or a Bluetooth headset which are capable of establishing voice calls via the Bluetooth connections with the Access Points.

In fact under normal circumstances, the Access Server and Access Point can communicate with any Bluetooth enabled device. These include not only PCs, PDAs, and laptops but any of the following that have a Bluetooth port; a truck, a refrigerator, a baggage trolley, a keyboard etc, although this is not relevant for the purpose of the present invention.

The Access Server 1 is also optionally connected to a local area network 10 having a number of end stations 11,12,13. In this example, this allows the Access Server to be integrated with currently existing local area networks within a building.

The Access Server 1 can also be connected to a remote communications network 14, which in this example is the Internet. This allows the communications devices coupled to the Access Server to communicate with remote users 15 or Access Servers of other remote sites 16.

Accordingly, the Access Points 2 allow voice calls to be made by and received by the Bluetooth communications devices 3,4,5,6,7,8 in turn allowing voice calls to be made using the LAN 10 and the Internet 14, via the Access Server 1. In this case, the Access Server operates as a call controller, as will be described in more detail below.

The Access Server is shown in more detail in Figure 2.

The Access Server may include an Internet interface 20, an Access Point interface 21, a LAN interface 22 and a PBX interface 23, all of which are interconnected via a bus 24. A microprocessor 25 and a memory 26 which are provided for processing and storing the operating software, are also coupled to the bus 24. An input/output device 27 is also provided.

The processor 25 is typically an x86 type processor operating a Linux type operating system such as Red Hat Linux. This is particularly advantageous as the Linux system is widely used as the operating system for a number of different software applications. Accordingly, the system can implement a wide variety of standard operating software for network servers and the like, as well as allowing third parties the opportunity to modify existing software and develop their own software. However, any suitable form of processing system may be used.

In addition to these features, it is also possible to include a number of Bluetooth radios 28, and a GPRS transceiver 29, both of which are coupled to the BUS 24.

A range of radios are supported, including standard and enhanced range devices.

Similarly, the Bluetooth design of the Access Server and the Access Point offers capabilities beyond the basic Bluetooth specification. These include advanced control of Bluetooth device state to improve throughput, and control of broadcast and multicast traffic streams to/from Bluetooth devices.

In this example, four different interfaces 20,21,22,23 are shown. However, it is not essential for the Access Server 1 to include all of these interfaces, depending on the particular configuration which is to be used, as will be explained in more detail below.

Thus, in order to enable Bluetooth voice calls to be made between the Bluetooth communication devices and remote third parties, all that is required is for the Access Server to include the Access Point interface 21, with appropriately connected Access Points 2, and one of the Internet interface 20, the LAN interface 22, or the PBX interface 23, coupled to an appropriate communications device. Thus, for example, the LAN interface 22 could be coupled to an Ethernet phone via the LAN 10. Further examples will be described in more detail below. Alternatively, the Access Point interface need not be used if the Bluetooth radios 28 are used instead. However, this will become clearer when various network configurations used by the Access Server are described in more detail below.

The Internet interface 20 is used primarily for providing an ISDN connection to an Internet service provider. However, the system can be reconfigured to use Ethernet, DSL or a POTS modem for Internet connectivity. Thus, this allows VolP calls to be transferred via the Internet 14.

The Access Point interface 21 is effectively an Ethernet interface which is adapted to operate with the Access Points, as will be explained in more detail below.

The LAN interface 22 is normally configured to be an Ethernet interface. However, this can be adapted to provide token ring or other forms of communication as required. Accordingly the LAN 10 can comprise an Ethernet, Token Ring or other similar network.

In order to be able to handle different communications protocols, each of the interfaces 20,21,22 will include a processor and a memory. The processor operates software stored in the memory which is appropriate for handling the required communications protocol. Thus in the case of the LAN interface 21, the default protocol is Ethernet. However, if alternative protocols such as Token Ring or ATM are used, then the software is adapted to translate the format of the data as it is transferred through the respective interface.

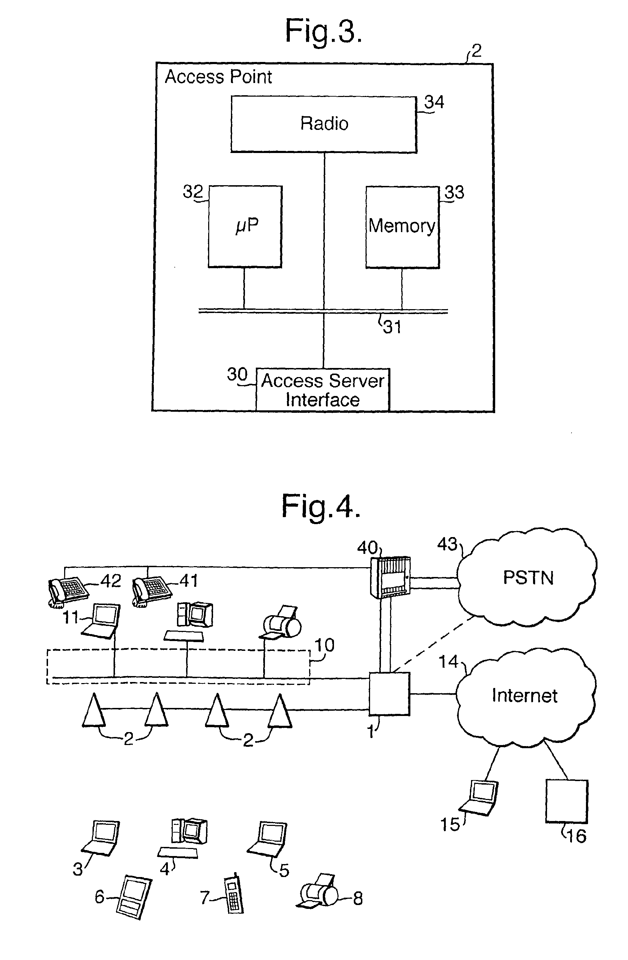

An Access Point according to the present invention is shown in Figure 3. The Access Point includes an Access Server interface 30, for connecting the Access Point to the Access Server. The Access Server interface 30 is connected via a BUS 31 to a processor 32 and a memory 33. The BUS is also coupled to a number of Bluetooth radios 34 (only one shown) providing enhanced capabilities such as improved bandwidth and call density.

The processor 32 is typically a processor system that can include one or more processors, of the same or different types within the system. For example, the processor system could include, but is not be limited to, a RISC (Reduced Instruction Set Computer) processor and a DSP (Digital Signal Processor) processor.

In use, the Access Points are usually connected to the Access Point interface 21 using a daisy chain Ethernet connection. This is particularly advantageous as it allows a large number of Access Points 2 to be connected in series via a single wire to the Access Point interface 21. In this case, power can be supplied to the Access Points 2 either via the connection from the Access Server 1, or via separate power supplies (not shown) connected to each of the Access Points 2 as required.

As an alternative however, the Access Points 2 can be connected to the Access Server 1 via an Ethernet hub. This would allow a larger number of Access Points 2 to be connected to each Access Server 1.

In use, each Access Point 2 is able to communicate with a number of communications devices 3,4,5,6,7,8 which are in range of the respective radio 34. Any data received at the radio is transferred to the memory 33 for temporary storage. The processor 32 will determine from the data the intended destination. If this is another Bluetooth device within range of the Access Point, the data will be transferred via the radio 34 to the appropriate communications device 3,4,5,6,7,8. Otherwise the data will be transferred via the BUS 31 to the Access Server interface 30 and on to the Access Server 1.

Upon receipt of the data by the Access Server 1, the Access Point interface 21 will temporarily store the data in the memory whilst the processor determines the intended destination of the data. The processor may also operate to translate the format of the data, if this is necessary. The data is then routed by the Access Server to the intended destination on either the LAN 2, the Internet 14 or alternatively, to a PBX network, as will be described in more detail below.

The traffic from Bluetooth devices (arriving through an Access Point or the Access Server) can be sent to the LAN through a number of different mechanisms; one is routing, another uses a technique called Proxy ARP to reduce the configuration needed. These mechanisms are bi-directional and also connect traffic from the LAN to Bluetooth devices.

Similarly, data can be transferred from the Access Server, via the Access Point interface 21 to an Access Point 2. In this case, the Access Point 2 receives the data and transfers it into the memory 33. The processor 32 then uses the data to determine the intended destination communication device before routing the data appropriately.

A number of different network configurations for transferring voice type calls via the Access Server are shown in Figures 4 to 7.

Figure 4 shows an example in which a connection to a PBX 40 is implemented, the Access Server 1 will have the ability to associate communications devices 3,4,5,6,7,8 such as Bluetooth phones and handsets as extensions of the PBX. This allows Bluetooth enabled phones to call phones 41,42 on the PBX 40, as well as making calls to public telephone networks 43, such as the PSTN (Public Switched Telephone Network) or POTS (Plain Old Telephone System).

For example, this enables the Bluetooth phone or headset to ring at the same time, or instead of a users desk phone 41,42. Indeed, the invention enable the Bluetooth phone to have all the features offered by the PBX as a minimum functionality; on top of this, some new features can be added.

The use of Bluetooth 3-in-1 phones which are capable of both Bluetooth and cellular communications allows users to use their cellular phone as their desk phone when in the office.

Where the PBX has no appropriate support for ISDN, the Access Server PBX interface 23 can be connected directly to the public network 43 as shown by the dotted line, to provide direct dial-in and dial out to Bluetooth phones and headsets.

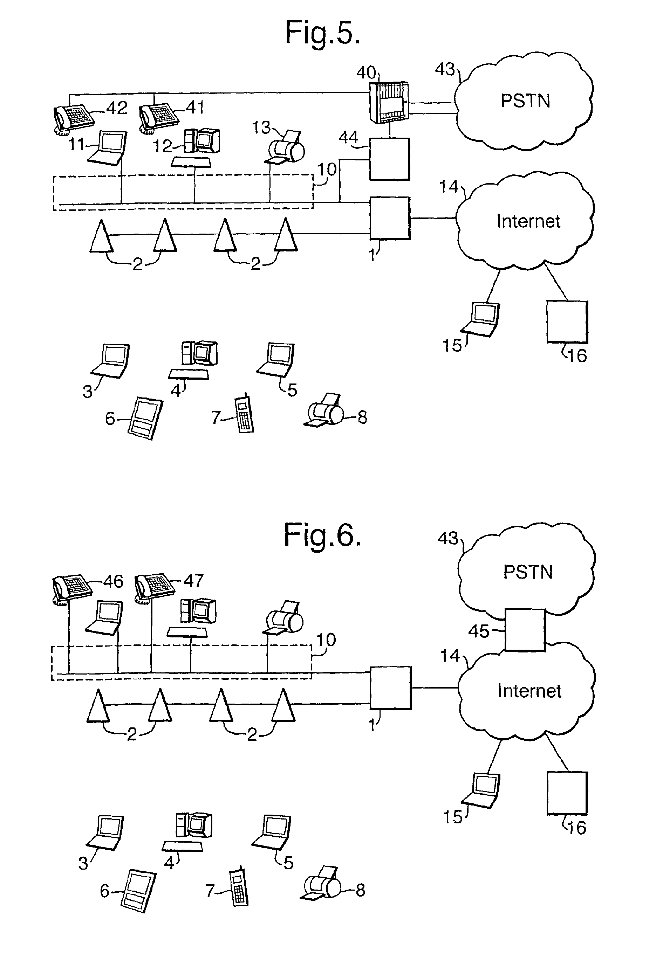

The Access Points 2 can also provide VolP (Voice Over IP) connectivity to the Access Server, as shown in Figure 5. In this example, the Access Server 1 is connected to the PBX 40 through a Vo|P gateway 45 connected to the LAN. The Access Points implement voice compression algorithms hence providing a scalable VolP solution (i.e. compression ability is increased with each Access Point).

In the example of Figure 6, VolP replaces the PBX 40 to allow connection to the telephone network 43. This is achieved by using a VolP gateway 45 positioned between the Internet 14 and the phone network 43, to allow all phone calls to be transferred via the Internet 14 and the Access Server 1. In this example Ethernet phones 46,47 can connect directly to the LAN 10, whilst the Access Server 1 provides a gateway from Bluetooth phones and headsets to the Internet and hence on to the phone network 43.

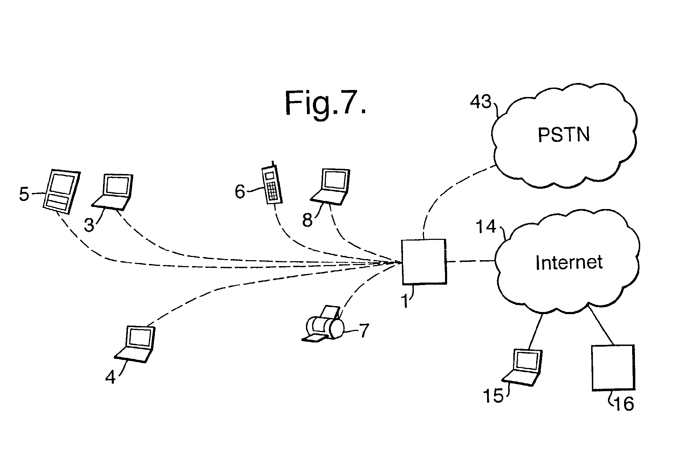

In the example of Figure 7, the GPRS system is used to provide constant on-line connection to the Internet. This is achieved using the GPRS transceiver 29 to provide the GPRS connection to the Internet 14, and the phone network 43, and using the Bluetooth radios 28 to provide the connection from the Access Server 1 to the communications devices 3,4,5,6,7,8. In circumstances where GPRS services do not provide sufficient bandwidth for all applications, the system may use dial-up ISDN to increase bandwidth. The always on full time connection to the Internet 14 provided by GPRS enables features such as VPN and public Web serving to be used, especially where additional bandwidth can be dialled up on demand.

In a mobile environment, it will be normal to use GSM phones for voice support. There may be added value in providing mobile voice connectivity via the Access Server.

Thus, the Access Server 1 provides wireless Internet and LAN access to a variety of Bluetooth enabled communications devices including PCs, printers, PDAs and WAP phones. It will also provide services specially tailored for PDAs through the use of OBEX (Object Exchange protocol) and WAP technology in the Access Server 1.

It will be appreciated from this that many users may be connected to the Access Server via the Access Points at any one time. Accordingly, it is necessary for the entire network system to operate a registration procedure to ensure that only authorised users of the system can have access.

Accordingly, the Access Server 1 stores a list of authorised users in the memory 26. In each case, a user name and password is provided for the user so that when they first access the system, the user name and password must be entered.

The Access Server and Access Point can implement a number of different security solutions. These range form low level authentication procedures inherent in Bluetooth devices, to high level security features which allow simple, easy to use and deploy services which operate in conjunction with or instead of Bluetooth specific security features. This allows a deployment of the Access Server & Access Point in a range of sites and applications.

Once this has been completed, the Access Server will associate a device indication with the associated user name and password. This ensures that a record is maintained of which device is being used by the user. Accordingly, any subsequent data addressed to the user can be sent directly to the device.

Thus, if the user is using a wireless communications device 3,4,5,6,7,8, the Access Server will store an indication of the device, either as a particular address, device identifier, or the like together with the user name and password. If any E-mail or the like is then received for that particular user, this can be directed to the device automatically.

The Access Server can store data concerning which radio 34,28 the user's communication device 3,4,5,6,7,8 is attached to. Every time a user's communication device 3,4,5,6,7,8 moves from one radio 28,34 to another there is a disconnection and reconnection process. To make this as seamless as possible a "roaming" capability is operated by the processor to allow the controlled hand-off from one radio to another.

The currently understood mechanism for handing off a user's communication device (hereinafter referred to as an an End-Point) from one Access Point to another is that the End-Point connects a second Access Point before disconnecting from the first Access Point. Since the Access Points are generally Masters in any Bluetooth connection this would mean that the End-Point would be Slave to two different Masters - quite a difficult proposition.

Operations involved during the hand-off proposed by this invention:
1) The End-Point (EP) is already connected to a first Access Point (AP1). In the steady state it is a Slave to AP1. This allows AP1 to more easily maintain connections to other devices. It is decided that conditions merit the handoff of the EP from AP1 to a second Access Point (AP2).
2) The EP performs a Role Change operation, as described in the Bluetooth specification. It is now Master and AP1 is a Slave. Any other device connections to AP1 must be maintained by AP1 participating in a scatternet.
3) A connection between EP and AP2 is made. This connection may be made by the EP (in which case the EP will be Master of both connections), or more likely, AP2 will make an outgoing connection to AP2 and immediately Role-Change the connection. The result is that the EP is now Master of two simultaneous connections, one to AP1 and one to AP2.
4) The transfer of the service (voice or data) is now seamlessly effected through the use of control messages.
5) Once the service is running between EP and AP2, the connection to AP1 is removed.
6) The EP finally performs a Role-Change and becomes a Slave to AP2.

Thus the EP has been handed over from AP1 to AP2 without needing to manage a scatternet. If either AP1 or AP2 have connection commitments to other devices (either voice or data) then scatternet functionality will be needed in the Access Point, but this is less complex than that required by the EP. This is because the Access Point will be Slave to the EP but Master to its other devices - an easier proposition than the EP needing to be Slave to AP1 and Slave to AP2 (which would be required if hand-off were to be performed without the Role-Change mechanism).

In the present invention, it is contemplated that an Access Server, an Access Point, or an End-Point can initiate a hand-off from one radio to another. For example, the Access Server may force a hand-off in order to manage traffic congestion.

## Claims

1. A method of hand-off in a wireless communications network in which an end point connection is transferred from one access point to another, comprising the steps of:
performing a role change such that an end point becomes master of an existing connection;
connecting the end point to the other access point to establish a new connection so that the end point is master of two connections simultaneously;
terminating the existing connection with the one access point; and,
performing a reverse role change so that the end point becomes slave of the new connection.

2. A method according to claim 1, in which the end point and the access points each operate one or more radio transceivers.

3. A method according to claim 1 or 2, in which the end point and the access points each operate one or more Bluetooth enabled radio transceivers.

4. A method according to any preceding claim, in which the one access point implements a scatternet in the event that it has to maintain existing connections with other end points.

5. A method according to any preceding claim, in which one of an access point and the end point initiates the hand-off sequence.

6. A method according to any preceding claim, in which the access points are connected to a common access server to form a wireless network.

7. A method according to claim 6, in which the access server initiates the hand-off sequence.

8. A method according to any preceding claim, in which the end point is a mobile device.

9. A method according to any preceding claim, in which the end point is a Bluetooth enabled device.

10. A method according to any preceding claim, in which the relative position of the access points is fixed.

11. A wireless network comprising a plurality of access points to which an end point can connect, wherein the access point and/or end point are adapted so that hand-off of a connection between the end point and one access point to another access point is effected by the method of any preceding claim.
